# NEUE EUROPÄISCHE PATENTSCHRIFT

(11) **EP 2 447 739 B2**
(45) Veröffentlichungstag und Bekanntmachung des Hinweises auf die Entscheidung über den Einspruch: **29.09.2021**
(45) Hinweis auf die Patenterteilung: 05.09.2018
(21) Anmeldenummer: 10014091.2
(22) Anmeldetag: 28.10.2010
(51) Int. Cl.: G01V 8/22

(54) **Verfahren zur optischen Erfassung von Objekten und Lichttaster**
Method for optically detecting objects and light button
Procédé de détection optique d'objets et bouton lumineux

(43) Veröffentlichungstag der Anmeldung: 02.05.2012
(73) Patentinhaber: SICK AG, 79183 Waldkirch (DE)
(72) Erfinder: Hörsch, Ingolf, Dr., 79102 Freiburg (DE); Merettig, Gerhard, 79350 Sexau (DE); Bergbach, Roland, 79341 Kenzingen (DE)
(74) Vertreter: Manitz Finsterwald Patent- und Rechtsanwaltspartnerschaft mbB

(56) Entgegenhaltungen:
- EP-A1- 1 512 992
- EP-A1- 1 816 488
- EP-A2- 1 801 618
- DE-A1- 10 318 764
- DE-A1- 19 730 341
- DE-A1- 19 808 215
- DE-A1- 19 850 270
- DE-C5- 19 721 105

## Beschreibung

Die vorliegende Erfindung betrifft ein Verfahren zur optischen Erfassung von Objekten in einem Überwachungsbereich, bei dem fokussiertes oder kollimiertes Licht von einem Sendeelement in den Überwachungsbereich gesendet wird, aus dem Überwachungsbereich von einem Objekt diffus und/oder spiegelnd reflektiertes Licht mit einem Lichtempfänger detektiert wird, welcher mehrere Empfangselemente aufweist, wobei sich die Position eines von dem reflektierten Licht auf dem Lichtempfänger erzeugten Lichtflecks in Abhängigkeit von der Entfernung des Objekts ergibt. Ferner betrifft die Erfindung einen entsprechenden Lichttaster.

Es ist bekannt, die Entfernung von Gegenständen in einem Überwachungsbereich mit Lichttastern zu bestimmen, die nach dem Triangulationsprinzip arbeiten. Ein derartiger Lichttaster, wie er beispielsweise in DE 198 50 270 A1 beschrieben ist, umfasst eine Sendeeinheit, welche ein Sendeelement, beispielsweise eine Leuchtdiode oder einen Laser, und gegebenenfalls eine Sendeoptik aufweist, um einen Lichtstrahl in den Erfassungsbereich zu einem dort gegebenenfalls befindlichen zu detektierenden Objekt auszusenden. Das Sendelicht kann von einem solchen Objekt reflektiert und von einem Lichtempfänger detektiert werden, der zusammen mit einer Empfängeroptik eine Empfängereinheit bildet. Der Lichtempfänger besteht bei bekannten Lösungen aus einer Zeile von fotosensitiven Empfangselementen.

Unter reflektiertem Licht ist nachfolgend sowohl solches Licht zu verstehen, das spiegelnd reflektiert wurde, als auch solches Licht, das diffus reflektiert wurde, wobei diffus reflektiertes Licht auch als remittiertes Licht bezeichnet wird. Sofern allgemein von reflektiertem Licht die Rede ist, ist damit sowohl spiegelnd als auch diffus reflektiertes Licht gemeint.

In Abhängigkeit der Entfernung zwischen Lichttaster und reflektierendem Objekt ändert sich die Position eines durch das reflektierte Licht erzeugten Lichtflecks auf dem Lichtempfänger. Zwischen dem Auftreffpunkt auf dem Lichtempfänger und der Entfernung des erfassten Objekts besteht ein eindeutiger geometrischer Zusammenhang. Durch Auswertung der Lichtverteilung auf dem Lichtempfänger kann damit die Entfernung zwischen Objekt und Lichttaster bestimmt werden. Weiterhin kann bei entsprechender Auswertung der Lichtverteilung auf dem Lichtempfänger bestimmt werden, ob sich ein Objekt innerhalb oder außerhalb eines Tastbereichs befindet, d.h. ob die Entfernung des Objekts innerhalb oder außerhalb vorbestimmter Grenzen liegt.

Derartige Lichttaster werden regelmäßig auch dazu eingesetzt, um auf Förderbändern oder Förderketten transportierte Verpackungen, beispielsweise Getränkeflaschen, zu erkennen. Zu diesem Zweck werden Lichttaster oberhalb des Förderbands derart angeordnet, dass sie in senkrechter Richtung auf das Förderband "schauen".

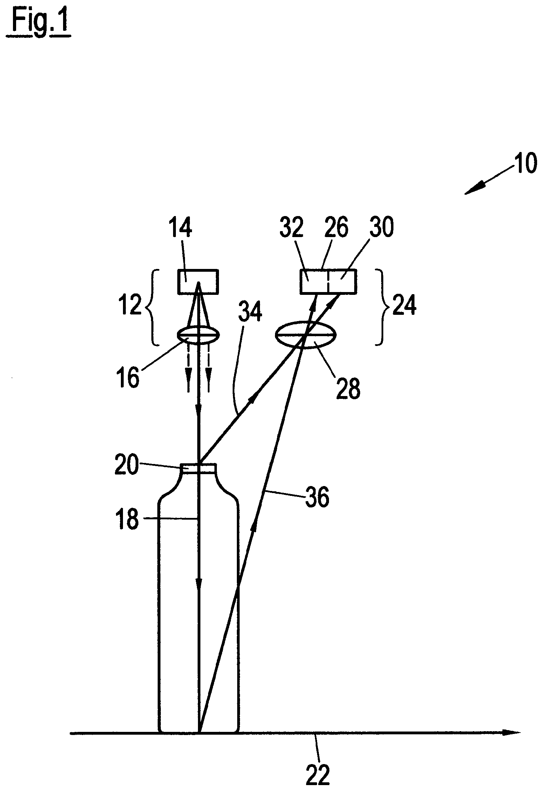

Um eine zuverlässige Detektion der auf dem Förderband transportierten Objekte zu gewährleisten, kommen bei bekannten Lösungen Triangulationslichttaster mit so genannter Hintergrundausblendung zum Einsatz. Ein derartiger Triangulationslichttaster 10 mit Hintergrundausblendung ist beispielhaft und schematisch in Fig. 1 dargestellt und umfasst eine Sendeeinheit 12, welche aus einem Sendeelement 14, beispielsweise einer punktförmig abstrahlenden LED, und einer Sendeoptik 16 besteht und einen fokussierten oder kollimierten Sendelichtstrahl 18 in Richtung auf ein Förderband 22 aussendet. Das von dem Förderband 22 oder einem darauf transportierten Objekt 20 diffus und/oder spiegelnd reflektierte Licht wird von einer Empfängereinheit 24 detektiert, welche einen Lichtempfänger 26 mit einem Array aus fotosensitiven Empfangselementen (nicht dargestellt) und einer vorgeschalteten Empfangsoptik 28 besteht. Die hier durch das Förderband 22 definierte Ebene wird auch als Hintergrundbereich bezeichnet.

Die Empfangselemente sind einer von zwei Detektionszonen 30, 32 fest zugeordnet, wobei die eine Detektionszone 30 im Wesentlichen Empfangslichtstrahlen 34 detektiert, die von einem Objekt 20 ausgehen, das sich in einem zwischen dem Lichttaster und dem Hintergrundbereich vorgesehenen Tastbereich befindet, und ein Tastsignal erzeugen, während die andere Detektionszone 32 von dem Förderband 22 reflektierte Empfangslichtstrahlen 36 detektiert, die ein Hintergrundsignal erzeugen. Die Erfassung von auf dem Förderband 22 transportierten Objekten 20 erfolgt auf der Grundlage der Differenz zwischen dem von der Detektionszone 30 detektierten Tastsignal und dem von der Detektionszone 32 detektierten Hintergrundsignal.

Häufig weist das Tastsignal gegenüber dem Hintergrundsignal eine wesentlich geringere Intensität auf, was die Erfassungssicherheit beeinträchtigt. Dies ist insbesondere dann der Fall, wenn es sich bei den zu detektierenden Objekten 20 um so genannte Gebinde handelt. Unter derartigen Gebinden versteht man zusammengepackte Flaschen, beispielsweise mit Mineralwasser gefüllte, meist transparente PET-Flaschen, die mittels einer in der Regel ebenfalls transparenten Schrumpffolie zu einer Packung von 2 x 3 Flaschen ("Six-Pack") verbunden sind.

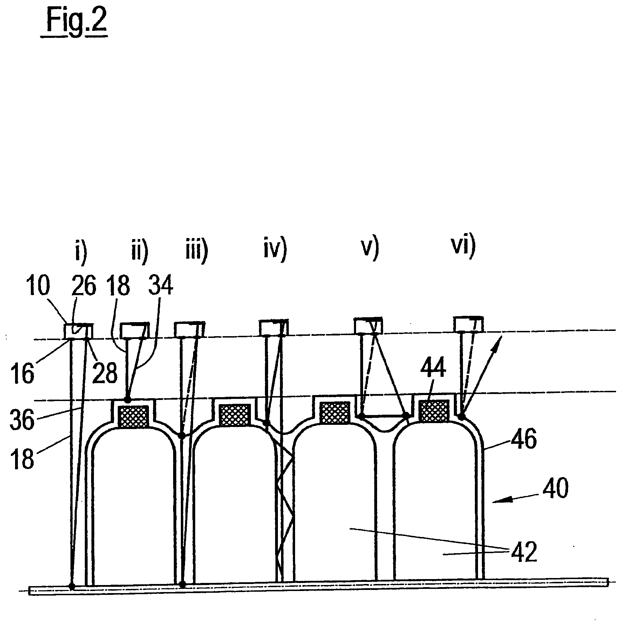

Fig. 2 zeigt verschiedene Erfassungssituationen für ein derartiges Gebinde 40, welches vier mit einem Deckel 44 verschlossene und mittels einer Folie 46 miteinander verbundene Flaschen 42 umfasst. Für jede der Erfassungssituationen i) bis vi) ist jeweils ein Lichttaster 10 einschließlich des zugehörigen Strahlengangs eingezeichnet, der von seinem prinzipiellen Aufbau dem Lichttaster 10 von Fig. 1 entspricht. Entsprechend werden in Fig. 2 für gleiche Elemente die gleichen Bezugszeichen wie in Fig. 1 verwendet. In Fig. 2 ist der Lichttaster 10 jeweils als Rechteck dargestellt, das die Sendeoptik 16, die Empfangsoptik 28 und den Lichtempfänger 26 zeigt. Nicht gesondert dargestellt ist jeweils die Sendeeinheit 14.

Der Fig. 2 jeweils linke Teil des Lichtempfängers 26 entspricht wiederum der Detektionszone 32 der Fig. 1 und der in der Fig. 2 jeweils rechte Teil des Lichtempfängers 26 der Detektionszone 30 der Fig. 1.

Grundsätzlich sind folgende Erfassungssituationen i) bis vi) denkbar:
i) Der Sendelichtstrahl 18 trifft auf das Förderband 22 und wird von dort als Hintergrundsignal auf die Detektionszone 32 des Lichtempfängers 26 reflektiert. Auf die Detektionszone 30 gelangt kein Tastsignal, so dass der Lichttaster 10 kein Objekt detektiert.
ii) Der Sendelichtstrahl 18 trifft auf einen Deckel 44 und wird mit relativ hoher Intensität als Tastsignal auf die Detektionszone 30 reflektiert. In diesem Fall detektiert der Lichttaster 10 zuverlässig das Vorhandensein eines Objekts.
iii) Der Sendelichtstrahl 18 trifft auf die Folie 46 und zugleich auch auf das Förderband 22, so dass ein Teil des Sendelichts 18, der z.B. an der Folie 46 reflektiert wird, entsprechend als Tastsignal auf die Detektionszone 30 reflektiert wird, während ein anderer Teil des Sendelichtstrahls 18, der die Folie 46 durchdringt, als Hintergrundsignal auf die Detektionszone 32 reflektiert wird. Das Tastsignal, also das von der Folie 46 reflektierte Licht, weist dabei im Vergleich zu dem Hintergrundsignal, also dem vom Förderband 22 reflektierten Licht, nur eine sehr geringe Intensität auf. Dieser Fall ist als kritisch anzusehen, da es hier zu einer falsch negativen Erfassung kommen kann.
iv) Hier trifft der Sendelichtstrahl 18 auf die Folie 46, welche wiederum einen Teil des Lichts auf die Detektionszone 30 reflektiert. Ein anderer Teil des Lichts wird von den Wänden der Flaschen 42 mehrfach reflektiert und gelangt nach einer Reflexion am Förderband 22 sowohl auf die Detektionszone 30 als auch auf die Detektionszone 32. Auch dieser Fall ist als kritisch anzusehen, da der Lichtempfänger 26 kein eindeutiges Signal empfängt.
v) Auch hier wird ein Teil des Sendelichtstrahls 18 von der Folie direkt in Richtung der Detektionszone 30 reflektiert. Zusätzlich gelangt ein weiterer Teil des Lichts auf einen vom ersten Auftreffort beabstandeten zweiten Auftreffort und wird unter einem anderen Winkel als das direkt reflektierte Licht auf den Lichtempfänger 26 reflektiert. Aufgrund dieses Winkelunterschieds erfolgt ein Auftreffen auch in der Detektionszone 32. Auch dieser Fall ist wiederum kritisch, da die Signaldifferenz der beiden Detektionszonen 30, 32 möglicherweise zu einem unbestimmten Ergebnis führt.
vi) In dieser Situation gelangt der Sendelichtstrahl 18 unter einem relativ flachen Winkel auf die Folie 46, aufgrund der spiegelnden Reflexionseigenschaften der Folie 46 wird der Großteil des Lichts nicht auf den Lichtempfänger 26 reflektiert, so dass das von der Detektionszone 30 detektierte Tastsignal nur eine sehr geringe Stärke aufweist. Dieser Fall ist ebenfalls als kritisch anzusehen, da auch hier keine eindeutige Erfassung eines Objekts erfolgen kann.

Der Vollständigkeit halber sei erwähnt, dass neben den hier beschriebenen Triangulationslichttastern mit Hintergrundausblendung auch rein energetische Lichttaster zur Anwendung kommen. Bei derartigen energetischen Lichttastern erfolgt die Erfassung des Objekts im Wesentlichen auf der Grundlage der Intensität des von dem Lichtempfänger erfassten Signals. Aufgrund der energetischen Auswertung hängt die Objekterfassung sehr stark von den Remissionseigenschaften der Objekte, z.B. deren Farbe und/oder Oberflächenstruktur ab. Eine zuverlässige Detektion von Gebinden ist damit nicht möglich.

Ferner ist aus DE 103 18 764 A1 ein Lichttaster bekannt, bei welchem eine Triangulation durch eine zeitversetzte Ansteuerung voneinander beabstandeter Lichtsender erzielt wird, wobei zur verbesserten Erkennung von glänzenden oder kontrastreichen Objekten zwei Empfangselemente vorgesehen sind.

Es ist daher die Aufgabe der Erfindung, ein Verfahren und einen Lichttaster der eingangs genannten Art anzugeben, welche eine zuverlässige Erkennung von transparenten und nicht transparenten Objekten gewährleistet, insbesondere von solchen Objekten, deren Oberfläche einen hohen Lichtanteil spiegelnd reflektieren.

Die Lösung dieser Aufgabe erfolgt durch die Merkmale des Anspruchs 1 dadurch, dass durch einen vorgeschalteten Einlernprozess eine Hintergrunddetektionszone des Lichtempfängers ermittelt wird, welche zumindest diejenigen Empfangselemente umfasst, welche aus einem den Überwachungsbereich begrenzenden Hintergrundbereich reflektiertes Licht empfangen, und dass bei der Detektion des von einem sich in einem Tastbereich, der Teil des Überwachungsbereichs ist, befindenden Objekt reflektierten Lichts zur Erfassung eines Objekts die zu der Hintergrunddetektionszone gehörenden Empfangselemente nicht berücksichtigt werden.

Bei dem erfindungsgemäßen Verfahren wird während des Einlernprozesses zunächst sichergestellt, dass nur solches Licht den Lichtempfänger erreicht, welches aus dem Hintergrundbereich reflektiert wird. Wenn das erfindungsgemäße Verfahren zur Detektion von auf einem Förderband transportierten Objekten eingesetzt wird, wird der Hintergrundbereich durch das Förderband definiert, wobei für den Einlernprozess wahlweise die Oberfläche des Förderbands selbst oder ein flach auf dem Förderband angeordnetes standardisiertes Hintergrund-Objekt, beispielsweise ein Stück weißer Karton, verwendet werden kann. Insofern ist unter einem Objekt im Sinne dieser Anmeldung auch ein sich im Hintergrundbereich befindendes Objekt zu verstehen.

Während des Einlernprozesses erzeugt das aus dem Hintergrundbereich reflektierte Licht einen Lichtfleck in einem bestimmten Teilabschnitt des Lichtempfängers. Die Empfangselemente in diesem Teilabschnitt werden der Hintergrunddetektionszone des Lichtempfängers zugeordnet, wobei es möglich ist, dass der Hintergrunddetektionszone zur Erhöhung der Detektionstoleranz noch weitere, insbesondere diesem Teilabschnitt unmittelbar benachbarte Empfangselemente zugeschlagen werden.

Während des regulären Betriebs, d.h. bei der Erfassung von Objekten, die sich innerhalb des Tastbereichs befinden, erzeugt erfindungsgemäß der Lichtempfänger ein Signal, wobei die zu der Hintergrunddetektionszone gehörenden Empfangselemente nicht berücksichtigt werden. Diese Nichtberücksichtigung erfolgt durch ein Nichtauslesen der betreffenden Empfangselemente. Bei dem erfindungsgemäßen Verfahren werden also nur solche Empfangslichtstrahlen berücksichtigt, die aus dem Tastbereich auf den Lichtempfänger gelangen. Es sei angemerkt, dass die genauen Grenzen des Tastbereichs letztlich davon abhängen, welche Empfangselemente der Hintergrunddetektionszone zugeordnet werden und bei der Objektdetektion nicht berücksichtigt werden.

Durch das erfindungsgemäße Verfahren ist es auch möglich, solche Objekte mit einem oberhalb eines Förderbands angeordneten Lichttaster zu erkennen, die für den Sendelichtstrahl überwiegend transparent sind und/oder deren Oberfläche stark glänzend ist, d.h. die das Sendelicht zum Großteil spiegelnd reflektiert. Dies wird dadurch erreicht, dass die aus dem Hintergrundbereich reflektierten Empfangsstrahlen unterdrückt werden, wobei durch den Einlernprozess eine individuelle und präzise Anpassung der Hintergrunddetektionszone an die geometrischen Gegebenheiten, insbesondere an den Abstand zwischen dem Lichttaster und dem Hintergrundbereich bzw. die Höhe der zu detektierenden Objekte erfolgen kann. Falls tatsächlich ein Teil des Sendelichts bei vorhandenem Objekt bis in den Hintergrundbereich vordringen kann, beeinträchtigt dies die Detektionssicherheit des Objekts dennoch nicht, da der von diesem Lichtanteil erzeugte Lichtfleck entweder in die ohnehin bei der Objekterfassung nicht berücksichtigte Hintergrunddetektionszone fällt (Fig. 2, Situation iii)) oder nur aufgrund von Reflexionen am zu detektierenden Objekt in eine Detektionszone des Lichtempfängers fällt, die bei der Objekterfassung berücksichtigt wird (Fig. 2, Situation iv)).

Es ist bevorzugt, wenn die Ermittlung der Hintergrunddetektionszone die Ermittlung einer Signalverteilung über den Lichtfleck, welcher von aus dem Hintergrundbereich des Überwachungsbereichs reflektierten Licht erzeugt wird, zumindest in Triangulationsrichtung umfasst, wobei bevorzugt die Ermittlung der Signalverteilung eine Interpolation der Signalverteilung umfasst. Unter der Ermittlung einer Signalverteilung über den Lichtfleck ist insbesondere auch das Anpassen oder Fitten einer Signalverteilungsfunktion zu verstehen, so dass während des Einlernprozesses auch dann die Hintergrunddetektionszone zuverlässig festgelegt werden kann, wenn das aus dem Hintergrundbereich reflektierte Licht keine ideale Lichtverteilung aufweist. So kann beispielsweise eine gewisse Asymmetrie des aus dem Hintergrundbereich reflektierten Lichts, beispielsweise aufgrund spiegelnder Reflexionen, kompensiert werden.

Dabei wird die Signalverteilung zumindest in Triangulationsrichtung ermittelt, wobei unter Triangulationsrichtung die Richtung auf dem Lichtempfänger zu verstehen ist, in die sich ein von einem Objekt erzeugter Lichtfleck bei Änderung des Objektabstands bewegt.

Zusätzlich kann die Ermittlung der Signalverteilung auch quer zur Triangulationsrichtung erfolgen. Dies ist insbesondere dann sinnvoll, wenn der Lichtempfänger matrixförmig angeordnete Empfangselemente aufweist, so dass eine Positionsbestimmung des Lichtflecks auch quer zur Triangulationsrichtung möglich ist. In dem Fall kann bevorzugt eine Hintergrunddetektionszone ermittelt werden, deren Erstreckung quer zur Triangulationsrichtung kleiner ist als die Erstreckung des Lichtempfängers in diese Richtung. Dadurch ist eine noch genauere Begrenzung der Hintergrunddetektionszone möglich, so dass auch solche von dem Objekt insbesondere spiegelnd reflektierten Lichtstrahlen berücksichtigt werden können, die nahe bei der Hintergrunddetektionszone auf dem Lichtempfänger auftreffen, so wie dies beispielsweise in Fig. 2, Situation iv) und v) der Fall sein kann.

Gemäß einer weiteren Fortbildung des erfindungsgemäßen Verfahrens kann durch einen weiteren vorgeschalteten Einlernprozess ferner eine Nahbereichsdetektionszone des Lichtempfängers ermittelt werden, welche diejenigen Empfangselemente umfasst, welche reflektiertes Licht aus einem Nahbereich des Überwachungsbereichs empfangen, dessen Abstand zum Lichtempfänger kleiner als ein vorbestimmter Grenzabstand ist, wobei bei der Erfassung des Objekts die zu der Nahbereichsdetektionszone gehörenden Empfangselemente nicht berücksichtigt werden. Dadurch ist es möglich, die Störlichtfestigkeit zu erhöhen und solche Empfangssignale zu unterdrücken, die von Objekten ausgehen, die sich außerhalb des Tastbereichs, insbesondere näher am Lichttaster befinden. Dies kann auch als Nahbereichsunterdrückung bezeichnet werden.

Die Aufgabe der Erfindung wird ferner durch die Merkmale des unabhängigen Vorrichtungsanspruchs gelöst und insbesondere durch einen Lichttaster mit wenigstens einem Lichtsender zum Aussenden eines Lichtsignals in einen Überwachungsbereich, einem Lichtempfänger, welcher mehrere Empfangselemente aufweist, zum Empfangen von aus dem Überwachungsbereich diffus und/oder spiegelnd reflektierten Lichts, wobei sich die Position eines von dem reflektierten Licht auf dem Lichtempfänger erzeugten Lichtflecks in Abhängigkeit von der Entfernung des Objekts ergibt, und eine Auswerteeinrichtung zur Bildung eines Ausgangssignals aus dem Messsignal des Lichtempfängers. Der erfindungsgemäße Lichttaster ist dadurch gekennzeichnet, dass die Auswerteeinrichtung zur Durchführung eines Einlernprozesses ausgelegt ist, durch den eine Hintergrunddetektionszone des Lichtempfängers ermittelt wird, welche diejenigen Empfangselemente umfasst, welche aus einem den Überwachungsbereich begrenzenden Hintergrundbereich reflektiertes Licht empfangen, und dass die Auswerteeinrichtung zur Bildung des Ausgangssignals unter Nichtberücksichtigung der zu der Hintergrunddetektionszone gehörenden Empfangselemente ausgelegt ist.

Gemäß einer bevorzugten Ausführungsform des erfindungsgemäßen Lichttasters sind der Lichtsender, ein Abbildungselement, welches zur Abbildung des reflektierten Lichts auf den Lichtempfänger ausgelegt ist, und der Lichtempfänger derart zueinander angeordnet, dass ein von dem Lichtsender auf einem Objekt erzeugter Lichtfleck zumindest dann scharf auf dem Lichtempfänger abgebildet wird, wenn sich das Objekt im Hintergrundbereich befindet. Dadurch wird eine noch präzisere Begrenzung der Hintergrunddetektionszone gewährleistet.

Gemäß einer weiteren bevorzugten Ausführungsform des erfindungsgemäßen Lichttasters sind der Lichtsender, ein Abbildungselement, welches zur Abbildung des reflektierten Lichts auf dem Lichtempfänger ausgelegt ist, und der Lichtempfänger derart zueinander angeordnet, dass sich eine den Sendelichtpfad umfassende Objektebene, eine durch die Empfangselemente definierte Bildebene und die Hauptebene des Abbildungselements in einer Schnittgeraden schneiden. Eine derartige Anordnung erfüllt die Scheimpflug-Bedingung, so dass von einem Objekt reflektiertes Sendelicht unabhängig von dem Abstand des Objekts zum Lichttaster stets scharf auf dem Lichtempfänger abgebildet wird.

Besondere Ausgestaltungen des erfindungsgemäßen Verfahrens, die Vorteile des erfindungsgemäßen Verfahrens und der besonderen Ausgestaltungen ergeben sich in analoger Weise aus der obigen Schilderung der besonderen Ausführungsformen der erfindungsgemäßen Vorrichtung, ihrer Vorteile und der Vorteile ihrer besonderen Ausführungsformen und umgekehrt. Weitere bevorzugte Ausgestaltungen des erfindungsgemäßen Verfahrens und des erfindungsgemäßen Lichttasters sind auch in den Unteransprüchen, der Beschreibung und den Zeichnungen offenbart.

Die Erfindung wird nachfolgend anhand eines Ausführungsbeispiels mit Bezug auf die Zeichnungen beschrieben. Es zeigen:
- Fig. 1: eine schematische Darstellung eines bekannten bzw. erfindungsgemäßen Lichttasters;
- Fig. 2: verschiedene Objekterfassungssituationen für einen Lichttaster gemäß Fig. 1;
- Fig. 3: einen Lichtempfänger für einen erfindungsgemäßen Lichttaster gemäß einem ersten Ausführungsbeispiel in schematischer Darstellung;
- Fig. 4: einen Lichtempfänger für einen erfindungsgemäßen Lichttaster gemäß einem zweiten Ausführungsbeispiel in schematischer Darstellung; und
- Fig. 5: eine schematische Darstellung einer weiteren Ausführungsform eines erfindungsgemäßen Lichttasters.

Ein erfindungsgemäßer Lichttaster entspricht in seinem prinzipiellen Aufbau dem in Fig. 1 dargestellten Lichttaster 10. Der Lichtempfänger 26 des erfindungsgemäßen Lichttasters 10 weist eine Vordergrunddetektionszone 30, welche im Wesentlichen die von einem sich innerhalb des Tastbereichs befindenden Objekts 20 reflektierten Empfangslichtstrahlen 34 empfängt, und eine Hintergrunddetektionszone 32 auf, welche im Wesentlichen die von einem sich im Hintergrundbereich befindenden Objekt, insbesondere einem Förderband 22, reflektierte Empfangslichtstrahlen 36 empfängt.
Der Lichtempfänger 26 ist mit einer nicht dargestellten Auswerteeinrichtung verbunden, in welcher dessen Empfangssignale verarbeitet und ausgewertet werden und von der ein Erfassungssignal ausgegeben wird.

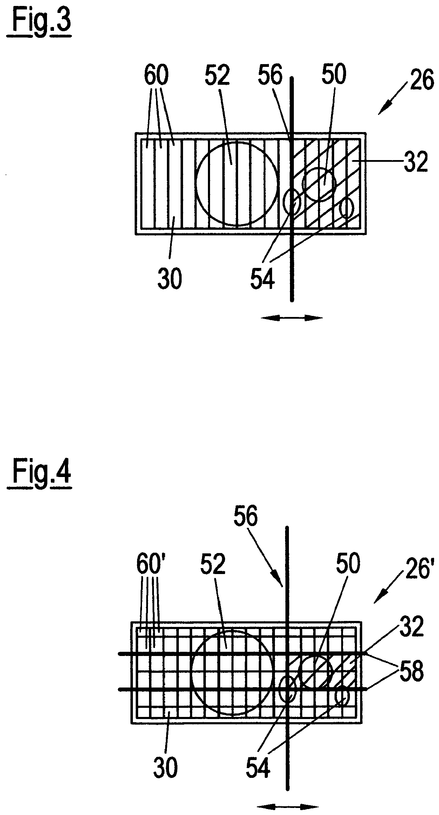

Gemäß Fig. 3 weist der Lichtempfänger 26 mehrere rechteckige, zeilenförmig angeordnete Empfangselemente 60 auf. Die Triangulationsrichtung ist durch einen Doppelpfeil angedeutet. Die Größe der einzelnen Empfangselemente 60 beträgt beispielsweise 0,1 mm x 1 mm, wobei sich die größere Ausdehnung quer zur Triangulationsrichtung erstreckt. Die Empfangselemente können gleich oder verschieden groß sein.

Auf dem Lichtempfänger 26 sind mehrere Signalbereiche 50, 52, 54 markiert, welche Lichtflecken entsprechen, die durch aus dem Überwachungsbereich reflektiertes Licht auf dem Lichtempfänger erzeugt wurden. Ein Hintergrundsignal 50 und ein im Durchmesser größeres Vordergrundsignal 52 werden von diffus reflektiertem Licht erzeugt, während Reflexionssignale 54 auf eine spiegelnde Reflexion zurückgehen.

Das Hintergrundsignal 50 wird hauptsächlich durch die Empfangslichtstrahlen 36 erzeugt, die aus einem durch das Förderband 22 definierten Hintergrundbereich reflektiert werden, während das Vordergrundsignal 52 durch Empfangslichtstrahlen 34 erzeugt wird, die von einem sich im Tastbereich befindenden Objekt 20 reflektiert werden. Die Reflexionssignale 54 können durch spiegelnde Reflexionen erzeugt werden, wie sie beispielsweise in den Situationen iv), v) und vi) (Fig. 2) auftreten.

Während eines Einlernprozesses zur Festlegung der Hintergrunddetektionszone 32, bei dem nur das Förderband 22 oder ein flach auf das Förderband aufgelegtes Testobjekt wie z.B. ein weißer Karton von dem Sendelichtstrahl 18 beleuchtet wird, trifft lediglich das Hintergrundsignal 50 auf den Lichtempfänger 26 auf. Durch Auswertung der Signalverteilung über die Empfangselemente 60 wird die Position des Hintergrundsignals 50 auf dem Lichtempfänger 26 bestimmt. Aufgrund der Signalverteilung und deren Position wird die Hintergrunddetektionszone 32 definiert, welche durch Schraffur dargestellt ist und von den Kanten des Lichtempfängers 26 und einer senkrecht zur Triangulationsrichtung verlaufenden Trennlinie 56 begrenzt ist.

Im Regelbetrieb zur Erfassung von Objekten wird lediglich der zu der Vordergrunddetektionszone 30 gehörende Teil der Empfangselemente 60 berücksichtigt. Die zur Hintergrunddetektionszone 32 gehörenden Empfangselemente 60 werden nicht berücksichtigt, was durch ein Nichtauslesen der betreffenden Empfangselemente 60 erfolgt.

Falls ein Reflexionssignal 54 - wie beispielsweise das linke Reflexionssignal 54 in Fig. 3 - in beiden Detektionszonen 30, 32 auftrifft, trägt es zumindest mit dem auf die Vordergrunddetektionszone 30 auftreffenden Signalanteil zu dem für eine Objekterfassung maßgeblichen Tastsignal bei und erhöht damit die Empfindlichkeit des Lichttasters 10. Im Unterschied zu einem Triangulationslichttaster mit Hintergrundausblendung, bei dem das für die Objekterfassung herangezogene Signal durch die Differenz der in den beiden Detektionszonen ermittelten Signale gebildet ist, führt ein von einem Objekt ausgehendes, fälschlich auf die Hintergrunddetektionszone 32 auftreffendes Reflexionssignal 54 hier nämlich nicht zu einer Verringerung des Empfangssignals.

Ein Lichtempfänger 26' gemäß einer alternativen Ausführungsform ist in Fig. 4 dargestellt, wobei Elemente, die das gleiche Bezugszeichen wie in Fig. 3 tragen, die gleiche Funktion oder Bedeutung wie die mit Bezug auf Fig. 3 erläuterten Elemente besitzen. Der Lichtempfänger 26' weist anstelle von zeilenförmig angeordneten Empfangselementen matrixförmig in Zeilen und Spalten angeordnete Empfangselemente 60' auf, wobei die Anzahl der Empfangselemente 60' in Triangulationsrichtung größer ist als die Anzahl der Empfangselemente 60' quer zur Triangulationsrichtung.

Die Verwendung eines Lichtempfängers 26' mit matrixförmig angeordneten Empfangselementen 60' ermöglicht es, die Hintergrunddetektionszone 32 noch genauer auf das eigentliche Hintergrundsignal 50 einzugrenzen. Zu diesem Zweck wird zusätzlich auch die Empfangssignalverteilung des Hintergrundsignals 50 quer zur Triangulationsrichtung ermittelt. Aufgrund dieser Empfangssignalverteilung werden zwei parallel zur Triangulationsrichtung verlaufende Trennlinien 58 ermittelt, welche zusammen mit der senkrecht zur Triangulationsrichtung verlaufenden Trennlinie 56 und der rechten Kante des Lichtempfängers 26' die Hintergrunddetektionszone 32 umgrenzen. Dadurch ist es möglich, einen größeren Teil der Reflexionssignale 54 der Vordergrunddetektionszone 30 zuzuschlagen, als es beim Ausführungsbeispiel gemäß Fig. 3 der Fall ist. Dies erhöht die Empfindlichkeit des Lichttasters 10 noch weiter.

Durch die flexible Positionierung der Trennlinien 56, 58 ist es bei beiden Ausführungsbeispielen (Fig. 3 und 4) möglich, die Größe der Hintergrunddetektionszone 32 optimal an die jeweiligen geometrischen Gegebenheiten, insbesondere an den Abstand zwischen dem Lichttaster 10 und dem Förderband 22 sowie an die Höhe der zu erfassenden Objekte 20 anzupassen.

Bevorzugt wird die Größe der Empfangselemente 60, 60' in Triangulationsrichtung so ausgewählt, dass die dadurch bestimmte minimale Auflösung des Lichtempfängers 26, 26' kleiner ist als der aufgrund der geometrischen Verhältnisse zu erwartende minimale Abstand zwischen dem Hintergrundsignal 50 und dem Vordergrundsignal 52.

Um zu gewährleisten, dass die auf die Lichtempfänger 26, 26' abgebildeten Lichtflecke möglichst randscharf umgrenzt sind, empfiehlt es sich, möglichst punktförmige Lichtquellen als Sendelement 14 einzusetzen. Dies können beispielsweise so genannte Punktstrahler-LEDs sein.

Alternativ wird das Sendeelement 14 so ausgewählt, dass damit ein linienförmiger Lichtfleck auf dem Lichtempfänger 26 bzw. 26' erzeugt wird, wobei sich die Hauptausdehnungsrichtung des Lichtflecks dann quer zur Triangulationsrichtung erstreckt. Dadurch wird das zu erfassende Objekt 20 unter einer bestimmten Winkelverteilung, beispielsweise zwischen +1° und -1°, beleuchtet, so dass insbesondere bei gewölbten Objektoberflächen die Wahrscheinlichkeit ansteigt, dass bestimmte Lichtstrahlen genau in Richtung des Lichtempfängers 26, 26' spiegelnd reflektiert werden und sich damit die Empfindlichkeit der Detektion weiter erhöht. Die gewünschte Winkelabdeckung kann z.B. durch ein lineares LED-Array erreicht werden, welches aus zwei oder mehr dicht aneinander platzierten Einzel-LEDs gebildet ist.

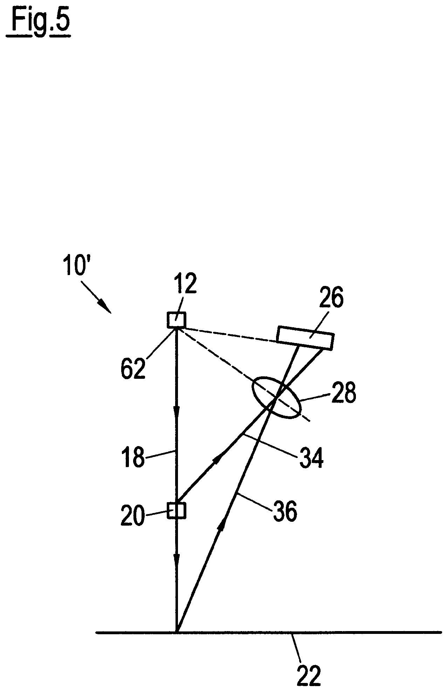

Fig. 5 zeigt in Abwandlung des Lichttasters 10 gemäß Fig. 1 eine alternative Ausgestaltung eines Lichttasters 10', wobei wiederum gleiche Bezugszeichen gleichen Elementen entsprechen, so dass lediglich auf die Unterschiede näher eingegangen wird.

Bei der Ausgestaltung gemäß Fig. 5 sind die Sendeeinheit 12, die Empfangsoptik 28 und der Lichtempfänger 26 derart zueinander angeordnet, dass sich eine Objektebene, welche den Pfad der Sendelichtstrahlen 18 umfasst, eine durch die Empfangselemente 60, 60' des Lichtempfängers 26 bzw. 26' (Fig. 3 und 4) definierte Bildebene und die Hauptebene der Sendeoptik 28 in einer Schnittgeraden 62 schneiden, welche sich senkrecht zur Zeichnungsebene erstreckt. Die Sendeeinheit 12, die Empfangsoptik 28 und der Lichtempfänger 26, 26' sind also so angeordnet, dass diese die Scheimpflug-Bedingung erfüllen. Hierzu ist anzumerken, dass von Objekten 20 bzw. dem Hintergrundbereich 22 nur dann Licht diffus und/oder spiegelnd reflektiert werden kann, wenn sich diese innerhalb des Sendelichtstrahls 18 befinden. Somit definieren die Sendelichtstrahlen 18 eine Objektebene. Durch die Anordnung nach Scheimpflug wird gewährleistet, dass ein von den Sendelichtstrahlen 18 auf dem Objekt 20 bzw. dem Förderband 22 erzeugter Lichtfleck stets scharf auf den Lichtempfänger 26 abgebildet wird.

### Bezugszeichenliste

- 10, 10': Lichttaster
- 12: Sendeeinheit
- 14: Sendeelement
- 16: Sendeoptik
- 18: Sendelichtstrahl
- 20: Objekt
- 22: Förderband
- 24: Empfängereinheit
- 26, 26': Lichtempfänger
- 28: Empfangsoptik
- 30: Detektionszone, Vordergrunddetektionszone
- 32: Detektionszone, Hintergrunddetektionszone
- 34, 36: Empfangslichtstrahl
- 40: Gebinde
- 42: Flasche
- 44: Deckel
- 46: Folie
- 50: Hintergrundsignal
- 52: Vordergrundsignal
- 54: Reflexionssignal
- 56, 58: Trennlinie
- 60, 60': Empfangselement
- 62: Schnittgerade

## Patentansprüche

1. Verfahren zur optischen Erfassung von Objekten in einem Überwachungsbereich, bei dem
- fokussiertes oder kollimiertes Licht von einem Sendeelement (14) in den Überwachungsbereich gesendet wird,
- aus dem Überwachungsbereich von einem Objekt (20) diffus und/oder spiegelnd reflektiertes Licht (34, 36) mit einem Lichtempfänger (26, 26') detektiert wird, welcher mehrere Empfangselemente (60, 60') aufweist,
wobei sich die Position eines von dem reflektierten Licht (34, 36) auf dem Lichtempfänger (26, 26') erzeugten Lichtflecks in Abhängigkeit von der Entfernung des Objekts (20) ergibt,
**dadurch gekennzeichnet,**
- **dass** durch einen vorgeschalteten Einlernprozess eine Hintergrunddetektionszone (32) des Lichtempfängers (26, 26') ermittelt wird, welche zumindest diejenigen Empfangselemente (60, 60') umfasst, welche aus einem den Überwachungsbereich begrenzenden Hintergrundbereich reflektiertes Licht empfangen, und
- **dass** während des regulären Betriebs, bei der Detektion des von einem sich in einem Tastbereich befindenden Objekt (20) reflektierten Lichts (34) zur Erfassung eines Objekts (20) die zu der Hintergrunddetektionszone (32) gehörenden Empfangselemente (26, 26') nicht berücksichtigt werden, wobei die Nichtberücksichtigung durch ein Nichtauslesen der betreffenden Empfangselemente (60, 60') erfolgt.

2. Verfahren nach Anspruch 1,
**dadurch gekennzeichnet,**
**dass** zur Durchführung des Einlernprozesses ein diffus reflektierendes Objekt im Überwachungsbereich, insbesondere im Hintergrundbereich angeordnet wird.

3. Verfahren nach Anspruch 1 oder 2,
**dadurch gekennzeichnet,**
**dass** die Ermittlung der Hintergrunddetektionszone (32) die Ermittlung einer Signalverteilung über den Lichtfleck (50), welcher von aus dem Hintergrundbereich des Überwachungsbereichs reflektiertem Licht (36) erzeugt wird, zumindest in Triangulationsrichtung umfasst, wobei bevorzugt die Ermittlung der Signalverteilung eine Interpolation der Signalverteilung umfasst.

4. Verfahren nach Anspruch 3,
**dadurch gekennzeichnet,**
**dass** die Ermittlung der Signalverteilung zusätzlich eine Ermittlung der Signalverteilung quer zur Triangulationsrichtung umfasst,

5. Verfahren nach einem der vorhergehenden Ansprüche,
**dadurch gekennzeichnet,**
**dass** durch einen weiteren vorgeschalteten Einlernprozess ferner eine Nahbereichsdetektionszone des Lichtempfängers (26') ermittelt wird, welche diejenigen Empfangselemente (60, 60') umfasst, welche reflektiertes Licht aus einem Nahbereich des Überwachungsbereichs empfangen, dessen Abstand zum Lichtempfänger (26, 26') kleiner als ein vorbestimmter Grenzabstand ist, wobei bei der Erfassung des Objekts (20) die zu der Nahbereichsdetektionszone gehörenden Empfangselemente (60, 60') nicht berücksichtigt werden.

6. Verfahren nach einem der Ansprüche 1 bis 4,
**dadurch gekennzeichnet,**
**dass** die Detektion des von einem Objekt (20) reflektierten Lichts (34) zur Erfassung eines Objekts (20) die Berücksichtigung aller nicht zur Hintergrunddetektionszone (32) gehörenden Empfangselemente (60, 60') umfasst.

7. Lichttaster mit
- wenigstens einem Lichtsender (12, 14) zum Aussenden eines Lichtsignales in einen Überwachungsbereich,
- einem Lichtempfänger (26, 26'), welcher mehrere Empfangselemente (60, 60') aufweist, zum Empfangen von aus dem Überwachungsbereich diffus und/oder spiegelnd reflektiertem Licht (34, 36),
wobei sich die Position eines von dem reflektierten Licht auf dem Lichtempfänger erzeugten Lichtflecks in Abhängigkeit von der Entfernung des Objekts ergibt, und
- eine Auswerteeinrichtung zur Bildung eines Ausgangssignales aus dem Messsignal des Lichtempfängers (60, 60'),
**dadurch gekennzeichnet,**
- **dass** die Auswerteeinrichtung zur Durchführung eines Einlernprozesses ausgelegt ist, durch den eine Hintergrunddetektionszone (32) des Lichtempfängers (26, 26') ermittelt wird, welche diejenigen Empfangselemente (60, 60') umfasst, welche aus einem den Überwachungsbereich begrenzenden Hintergrundbereich reflektiertes Licht (36) empfangen, und
- **dass** die Auswerteeinrichtung während des regulären Betriebs, zur Bildung des Ausgangssignales unter Nichtberücksichtigung der zu der Hintergrunddetektionszone (32) gehörenden Empfangselemente (60, 60') ausgelegt ist, wobei die Nichtberücksichtigung durch ein Nichtauslesen der betreffenden Empfangselemente (60, 60') erfolgt.

8. Lichttaster nach Anspruch 7,
**dadurch gekennzeichnet,**
**dass** die Empfangselemente (60, 60') in Form einer MxN-Matrix angeordnet sind, wobei M>1 und N>=1 ist und sich die M-Dimension in Triangulationsrichtung und die N-Dimension quer zur Triangulationsrichtung erstreckt.

9. Lichttaster nach Anspruch 7 oder 8,
**dadurch gekennzeichnet,**
**dass** der Lichtsender (12), ein Abbildungselement (28), welches zur Abbildung des reflektierten Lichts (34, 36) auf den Lichtempfänger (26, 26') ausgelegt ist, und der Lichtempfänger (26, 26') derart zueinander angeordnet sind, dass ein von dem Lichtsender (12) auf einem Objekt erzeugter Lichtfleck zumindest dann scharf auf den Lichtempfänger (26, 26') abgebildet wird, wenn sich das Objekt im Hintergrundbereich befindet.

10. Lichttaster nach einem der Ansprüche 7 bis 9,
**dadurch gekennzeichnet,**
**dass** der Lichtsender (12), ein Abbildungselement (28), welches zur Abbildung des reflektierten Lichts (34, 36) auf den Lichtempfänger (26, 26') ausgelegt ist, und der Lichtempfänger (26, 26') derart zueinander angeordnet sind, dass sich eine den Sendelichtpfad (18) umfassende Objektebene, eine durch die Empfangselemente (26, 26') definierte Bildebene und die Hauptebene des Abbildungselements (28) in einer Schnittgeraden schneiden.

11. Lichttaster nach einem der Ansprüche 7 bis 10,
**dadurch gekennzeichnet,**
**dass** der Lichtsender (26, 26') dazu ausgelegt ist, einen langgestreckten Lichtfleck im Überwachungsbereich zu erzeugen, dessen Haupterstreckungsrichtung sich bevorzugt quer zur Triangulationsrichtung erstreckt.

12. Lichttaster nach Anspruch 11,
**dadurch gekennzeichnet,**
**dass** der Lichtsender (12) wenigstens zwei zeilenförmig angeordnete Lichtquellen, insbesondere LEDs umfasst.

## Claims

1. A method for the optical detection of objects in a monitored zone in which
- focused or collimated light is transmitted by a transmission element (14) into the monitored zone;
- light (34, 36) reflected from the monitored zone diffusely and/or reflectively by an object (20) is detected by a light receiver (26, 26') which has a plurality of reception elements (60, 60'),
wherein the position of a light spot produced on the light receiver (26, 26') by the reflected light (34, 36) results in dependence on the distance of the object (20),
**characterized in that**
- a background detection zone (32) of the light receiver (26, 26') is determined by a previous teaching process and at least comprises those reception elements (60, 60') that receive light reflected from a background zone bounding the monitored zone; and
- **in that**, during regular operation, for the detection of an object (20), the reception elements (26, 26') which belong to the background detection zone (32) are not taken into account in the detection of the light (34) reflected by an object (20) located in a sensing zone, with the not taking into account taking place through a not reading of the respective reception elements (60, 60').

2. A method in accordance with claim 1,
**characterized in that**
a diffusely reflective object is arranged in the monitored zone, in particular in the background zone, to carry out the teaching process.

3. A method in accordance with claim 1 or claim 2,
**characterized in that**
the determination of the background detection zone (32) comprises the determination of a signal distribution via the light spot (50), which is produced from light (36) reflected from the background zone of the monitored zone, at least in the triangulation direction, with the determination of the signal distribution preferably comprising an interpolation of the signal distribution.

4. A method in accordance with claim 3,
**characterized in that**
the determination of the signal distribution additionally comprises a determination of the signal distribution transverse to the triangulation direction.

5. A method in accordance with any one of the preceding claims,
**characterized in that**
a near range detection zone of the light receiver (26') is furthermore determined by a further previous teaching process and comprises those reception elements (60, 60') that receive reflected light from a near zone of the monitored zone whose distance from the light receiver (26, 26') is smaller than a predetermined limit distance, with the reception elements (60, 60') which belong to the near range detection zone not being taken into account in the detection of the object (20).

6. A method in accordance with any one of the claims 1 to 4,
**characterized in that,**
for the detection of an object (20), the detection of the light (34) reflected by an object (20) comprises the taking into account of all the reception elements (60, 60') which do not belong to the background detection zone (32).

7. An optical sensor comprising
- at least one light transmitter (12, 14) for transmitting a light signal into a monitored zone;
- a light receiver (26, 26') which has a plurality of reception elements (60, 60') for receiving light (34, 36) diffusely and/or reflectively reflected from the monitored zone,
with the position of a light spot produced on the light receiver by the reflected light resulting in dependence on the distance of the object; and
- an evaluation device for forming an output signal from the measured signal of the light receiver (60, 60'),
**characterized in that**
- the evaluation device is configured to carry out a teaching process by which a background detection zone (32) of the light receiver (26, 26') is determined which comprises those reception elements (60, 60') that receive light (36) reflected from a background zone bounding the monitored zone; and
- **in that**, during regular operation, the evaluation device is configured to form the output signal while not taking into account the reception elements (60, 60') which belong to the background detection zone (32), with the not taking into account taking place through a not reading of the respective reception elements (60, 60').

8. An optical sensor in accordance with claim 7,
**characterized in that**
the reception elements (60, 60') are arranged in the form of an M x N matrix, where M>1 and N>=1 and the M dimension extends in the triangulation direction and the N dimension extends transversely to the triangulation direction.

9. An optical sensor in accordance with claim 7 or claim 8,
**characterized in that**
the light transmitter (12), an imaging element (28) which is configured to image the reflected light (34, 36) onto the light receiver (26, 26'), and the light receiver (26, 26') are arranged with respect to one another such that a light spot produced on an object by the light transmitter (12) is at least imaged sharply onto the light receiver (26, 26') when the object is located in the background zone.

10. An optical sensor in accordance with any one of the claims 7 to 9,
**characterized in that**
the light transmitter (12), an imaging element (28) which is configured to image the reflected light (34, 36) onto the light receiver (26, 26'), and the light receiver (26, 26') are arranged with respect to one another such that an object plane comprising the transmitted light path (18), an image plane defined by the reception elements (26, 26'), and the main plane of the imaging element (28) intersect at a line of intersection.

11. An optical sensor in accordance with any one of the claims 7 to 10,
**characterized in that**
the light transmitter (26, 26') is configured to produce an elongate light spot in the monitored zone whose main direction of extent preferably extends transversely to the triangulation direction.

12. An optical sensor in accordance with claim 11,
**characterized in that**
the light transmitter (12) comprises at least two light sources arranged in linear form, in particular LEDs.

## Revendications

1. Procédé pour la détection optique d'objets dans une zone à surveiller, dans lequel
- une lumière focalisée ou collimatée est émise par un élément émetteur (14) dans la zone à surveiller,
- une lumière (34, 36) réfléchie de façon diffuse et/ou spéculaire par un objet (20) à partir de la zone à surveiller est détectée au moyen d'un récepteur de lumière (26, 26') qui comprend plusieurs éléments récepteurs (60, 60'), dans lequel
la position d'une tache lumineuse générée par la lumière réfléchie (34, 36) sur le récepteur de lumière (26, 26') résulte en fonction de la distance de l'objet (20),
**caractérisé en ce que**
- une zone de détection d'arrière-plan (32) du récepteur de lumière (26, 26') est déterminée par un processus d'apprentissage exécuté préalablement, zone qui comprend au moins ceux des éléments récepteurs (60, 60') qui reçoivent une lumière réfléchie à partir d'une zone d'arrière-plan délimitant la zone à surveiller, et
- pendant le fonctionnement ordinaire, lors de la détection de la lumière (34) réfléchie par un objet (20) situé dans une zone de palpage, les éléments récepteurs (26, 26') appartenant à la zone de détection d'arrière-plan (32) ne sont pas pris en compte pour la détection d'un objet (20), la non-prise en compte ayant lieu par une non-lecture des éléments récepteurs correspondants (60, 60').

2. Procédé selon la revendication 1,
**caractérisé en ce que**
pour exécuter le processus d'apprentissage, un objet réfléchissant de façon diffuse est agencé dans la zone à surveiller, en particulier dans la zone d'arrière-plan.

3. Procédé selon la revendication 1 ou 2,
**caractérisé en ce que**
la détermination de la zone de détection d'arrière-plan (32) inclut la détermination d'une répartition des signaux sur la tache lumineuse (50) qui est générée par la lumière (36) réfléchie à partir de la zone d'arrière-plan de la zone à surveiller, au moins en direction de triangulation, et de préférence la détermination de la répartition des signaux inclut une interpolation de la répartition des signaux.

4. Procédé selon la revendication 3,
**caractérisé en ce que**
la détermination de la répartition des signaux inclut en supplément une détermination de la répartition des signaux transversalement à la direction de triangulation.

5. Procédé selon l'une des revendications précédentes,
**caractérisé en ce que**
une zone de détection de proximité du récepteur de lumière (26') est en outre déterminée par un autre processus d'apprentissage exécuté préalablement, zone qui comprend ceux des éléments récepteurs (60, 60') qui reçoivent une lumière réfléchie à partir d'une zone de proximité de la zone à surveiller, dont la distance par rapport au récepteur de lumière (26, 26') est inférieure à une distance limite prédéterminée, et lors de la détection de l'objet (20), les éléments récepteurs (60, 60') appartenant à la zone de détection de proximité ne sont pas pris en compte.

6. Procédé selon l'une des revendications 1 à 4,
**caractérisé en ce que**
la détection de la lumière (34) réfléchie par un objet (20) pour détecter un objet (20) inclut la prise en compte de tous les éléments récepteurs (60, 60') qui n'appartiennent pas à la zone de détection d'arrière-plan (32).

7. Capteur photoélectrique comportant
- au moins un émetteur de lumière (12, 14) pour émettre un signal lumineux dans une zone à surveiller,
- un récepteur de lumière (26, 26') qui comprend plusieurs éléments récepteurs (60, 60') pour recevoir une lumière (34, 36) réfléchie de façon diffuse et/ou spéculaire à partir de la zone à surveiller,
dans lequel la position d'une tache lumineuse générée par la lumière réfléchie sur le récepteur de lumière résulte en fonction de la distance de l'objet, et
- une unité d'évaluation pour former un signal de sortie à partir du signal de mesure du récepteur de lumière (60, 60'),
**caractérisé en ce que**
- l'unité d'évaluation est conçue pour exécuter un processus d'apprentissage par lequel une zone de détection d'arrière-plan (32) du récepteur de lumière (26, 26') est déterminée, zone qui comprend au moins ceux des éléments récepteurs (60, 60') qui reçoivent une lumière (36) réfléchie à partir d'une zone d'arrière-plan délimitant la zone à surveiller, et **en ce que**
- pendant le fonctionnement ordinaire, l'unité d'évaluation est conçue pour former le signal de sortie en ne prenant pas en compte les éléments récepteurs (60, 60') qui appartiennent à la zone de détection d'arrière-plan (32), la non-prise en compte ayant lieu par une non-lecture des éléments récepteurs correspondants (60, 60').

8. Capteur photoélectrique selon la revendication 7,
**caractérisé en ce que**
les éléments récepteurs (60, 60') sont agencés sous la forme d'une matrice MxN, dans laquelle M>1 et N=1, et la dimension M s'étend en direction de triangulation et la dimension N s'étend transversalement à la direction de triangulation.

9. Capteur photoélectrique selon la revendication 7 ou 8,
**caractérisé en ce que**
l'émetteur de lumière (12), un élément d'imagerie (28) qui est conçu pour l'imagerie de la lumière réfléchie (34, 36) sur le récepteur de lumière (26, 26'), et le récepteur de lumière (26, 26') sont agencés les uns par rapport aux autres de telle sorte qu'une tache lumineuse générée par l'émetteur de lumière (12) sur un objet est imagée sur le récepteur de lumière (26, 26') de façon nette au moins lorsque l'objet se trouve dans la zone d'arrière-plan.

10. Capteur photoélectrique selon l'une des revendications 7 à 9,
**caractérisé en ce que**
l'émetteur de lumière (12), un élément d'imagerie (28) qui est conçu pour l'imagerie de la lumière réfléchie (34, 36) sur le récepteur de lumière (26, 26'), et le récepteur de lumière (26, 26') sont agencés les uns par rapport aux autres de telle sorte qu'un plan d'objet comprenant le chemin optique d'émission (18), un plan d'image défini par les éléments récepteurs (26, 26') et le plan principal de l'élément d'imagerie (28) s'intersectent dans une droite d'intersection.

11. Capteur photoélectrique selon l'une des revendications 7 à 10,
**caractérisé en ce que**
l'émetteur de lumière (26, 26') est conçu pour générer une tache lumineuse allongée dans la zone à surveiller, dont la direction d'extension principale s'étend de préférence transversalement à la direction de triangulation.

12. Capteur photoélectrique selon la revendication 11,
**caractérisé en ce que**
l'émetteur de lumière (12) comprend au moins deux sources de lumière agencées en forme de ligne, en particulier des LEDs.
